# EUROPEAN PATENT APPLICATION

(11) **EP 4 523 836 A1**
(43) Date of publication of application: **19.03.2025**
(21) Application number: 23824094.9
(22) Date of filing: 11.05.2023
(51) Int. Cl.: B23K 26/362, B23K 26/16, B08B 15/00, H01M 4/04, H01M 4/139

(54) **LASER ETCHING DEVICE, LASER ETCHING SYSTEM, ELECTRODE ETCHED USING LASER, AND METHOD FOR MANUFACTURING SAME ELECTRODE**

(30) Priority: 14.06.2022 KR 20220072395; 02.05.2023 KR 20230057012
(71) Applicant: LG Energy Solution, Ltd., Seoul 07335 (KR)
(72) Inventor: LEE, Seo Jun, Daejeon 34122 (KR); MOON, Hong Seok, Daejeon 34122 (KR); KIM, Tae Su, Daejeon 34122 (KR); KIM, Gil Woo, Daejeon 34122 (KR); PARK, Jong In, Daejeon 34122 (KR); LEE, Hyuk Soo, Daejeon 34122 (KR); PARK, Jung Hyun, Daejeon 34122 (KR); LEE, Byung Hee, Daejeon 34122 (KR); KIM, Won Seop, Daejeon 34122 (KR); SONG, Won Gyu, Daejeon 34122 (KR); NA, Ki Beom, Daejeon 34122 (KR); LEE, Heon Seung, Daejeon 34122 (KR)
(74) Representative: Plasseraud IP
(86) International application number: PCT/KR2023/006434
(87) International publication number: WO 2023/243868

(57) **Abstract**

A laser etching device, which etches an active material portion on an electrode sheet including the active material portion and a non-coating portion, according to an embodiment of the present invention includes a laser unit configured to irradiate laser onto the active material portion, a blowing unit configured to blow foreign substances generated by the etching of the active material portion toward the non-coating portion, and a suction unit disposed at an opposite side of the blowing unit with the laser unit therebetween to suction the foreign substances, wherein the laser unit, the blowing unit, and the suction unit are disposed in a direction traversing a moving direction of the electrode sheet.

## Description

### TECHNICAL FIELD

### CROSS-REFERENCE TO RELATED APPLICATION

The present application claims the benefit of the priority of Korean Patent Application Nos. 10-2022-0072395, filed on June 14, 2022, 10-2023-0057012, filed on May 02, 2023, which are hereby incorporated by reference in their entirety.

### TECHNICAL FIELD

The present invention relates to a laser etching device, a laser etching system, an electrode etched using a laser, and a method for manufacturing the electrode.

### BACKGROUND ART

In response to environmental pollution and depletion of petroleum resources, research and development on power generation based on Eco-friendly energy sources are being conducted. Particularly, research on secondary batteries is being actively conducted, and research is being conducted on various aspects such as materials, structures, processes, and systems of the secondary batteries.

The secondary batteries undergo various processes in a manufacturing process. In general, the secondary batteries are produced through processes such as an electrode process, an assembly process, and a chemical process. In the above processes, in particular, in the electrode process, an active material is applied in a predetermined pattern on an electrode sheet, and techniques for raw material mixing conditions, temperature, and process conditions of the coating device are proposed for managing coating quality.

According to the related art, when an active material is applied on an electrode sheet in a predetermined pattern, sliding or mismatch may occur at an edge of a coating area, and there is a concern that deterioration in performance and quality of the electrode assembly occurs due to deterioration in coating quality.

### DISCLOSURE OF THE INVENTION

### TECHNICAL PROBLEM

An object of the present invention for solving the above problem is to provide a laser etching device capable of improving coating quality of an active material through etching using a laser, a laser etching system, an electrode etched using a laser, and a method for manufacturing the electrode.

### TECHNICAL SOLUTION

A laser etching device, which etches an active material portion on an electrode sheet including the active material portion and a non-coating portion, according to an embodiment of the present invention includes a laser unit configured to irradiate laser onto the active material portion, a blowing unit configured to blow foreign substances generated by the etching of the active material portion toward the non-coating portion, and a suction unit disposed at an opposite side of the blowing unit with the laser unit therebetween to suction the foreign substances, wherein the laser unit, the blowing unit, and the suction unit are disposed in a direction traversing a moving direction of the electrode sheet.

A laser etching system, which etches a first active material portion and a second active material portion on an electrode sheet including the first active material portion, the second active material portion, and a non-coating portion disposed between the first active material portion and the second active material portion, according to an embodiment of the present invention includes a first laser etching device configured to etch the first active material portion, and a second laser etching device configured to etch the second active material portion, wherein each of the first laser etching device and the second laser etching device includes a laser unit configured to irradiate laser onto the active material portion, a blowing unit configured to blow foreign substances generated by the etching of the active material portion toward the non-coating portion, and a suction unit disposed at an opposite side of the blowing unit with the laser unit therebetween to suction the foreign substances, wherein the laser unit, the blowing unit, and the suction unit are disposed in a direction traversing a moving direction of the electrode sheet.

An electrode according to an embodiment of the present invention includes an active material portion coated with an active material on an electrode sheet, and a non-coating portion on which the active material is not applied on the electrode sheet, wherein a heat-affected zone (HAZ) having a width of 200 µm or less is defined on a boundary between the active material portion and the non-coating portion.

A method for manufacturing an electrode according to an embodiment of the present invention includes applying an active material on an electrode sheet to form an active material portion and a non-coating portion, and etching a portion of an edge of the active material portion, wherein the etching of the portion of the edge includes irradiating laser to the portion of the edge using a laser unit to etch the portion of the edge, blowing foreign substances generated by etching the portion of the edge toward the non-coating portion using a blowing unit, and suctioning the foreign substances blown and diffused by using a suction unit disposed at an opposite side of the blowing unit with the laser unit therebetween.

### ADVANTAGEOUS EFFECTS

According to the preferred embodiment of the present invention, the coating quality of the active material may be improved in the electrode process.

According to the preferred embodiment of the present invention, even if the portion of the coated active material is managed through the etching, the diffusion of the foreign substances caused by the etching may be effectively prevented.

### BRIEF DESCRIPTION OF THE DRAWINGS

FIG. 1 is a schematic view illustrating an example of applying an active material on an electrode sheet.
FIGS. 2 and 3 are schematic view of an area to which etching is applicable when the active material is applied on the electrode sheet according to embodiments of the present invention.
FIG. 4 is a schematic view of a laser etching system according to an embodiment of the present invention.
FIG. 5 is a schematic view illustrating a laser etching device of a laser etching system and a state in which the laser etching device etches a first active material portion according to an embodiment of the present invention.
FIG. 6 is a schematic view illustrating a modified example of the laser etching device illustrated in FIG. 5.
FIG. 7 is a schematic view of a laser etching system according to another embodiment of the present invention.
FIG. 8 is a view illustrating a state in which a laser etching device of the laser etching system etches a second active material portion according to another embodiment of the present invention.
FIG. 9 is a view illustrating a heat-affected zone defined at a boundary between the active material portion and a non-coating portion according to embodiments of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

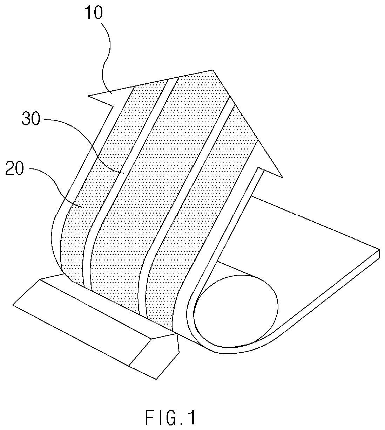

FIG. 1 is a schematic view illustrating an example of applying an active material on an electrode sheet 10.

In an electrode process of processes of producing a secondary battery, a process of applying the active material on the electrode sheet 10 may be performed. The active material may be applied on the electrode sheet (or electrode current collector) in a predetermined pattern, and an active material portion, on which the active material is applied, and a non-coating portion 30, on which the active material is not applied, may be provided on the electrode sheet 10.

As illustrated in FIG. 1, the active material portion 20 may include an active material portion 20 having a regular arrangement through the predetermined pattern of the active material coating (stripe coating) on the electrode sheet 10. The non-coating portion 30 may be disposed between the active material portions 20. The predetermined pattern is not limited to the stripe coating and also may be intermittent coating and may not be particularly limited.

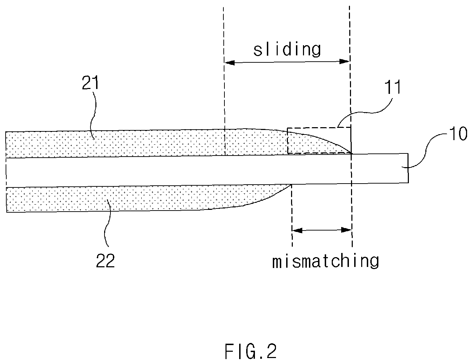

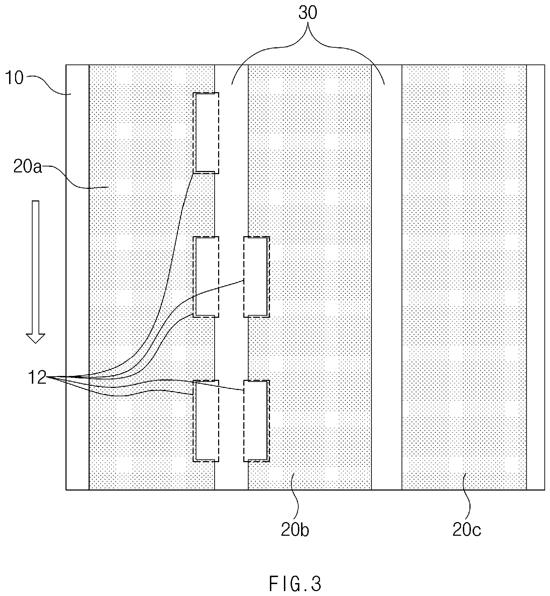

FIGS. 2 and 3 are schematic view of an area to which etching is applicable when the active material is applied on the electrode sheet 10 according to embodiments of the present invention. FIG. 2 is a side view of the electrode sheet 10, and FIG. 3 is a plan view of the electrode sheet 10. The above description may be equally or similarly applied below.

Referring to FIG. 2, the active material may be applied on both surfaces of the electrode sheet 10. For example, the active material may be applied on a top surface of the electrode sheet 10 to provide an upper active material portion 21, and the active material may be applied on a bottom surface of the electrode sheet 10 to provide a lower active material portion 22. In this case, sliding may occur during the coating of the upper active material portion 21, and mismatching with the lower active material portion 22 may occur. When mismatching with the lower active material portion 22 occurs due to the sliding during the coating of the upper active material portion 21, in order to improve coating quality by solving the mismatching, etching may be required on a boundary area 11 that is an edge area of the upper active material portion 21. Also, unlike that illustrated in FIG. 2, the sliding may occur at the lower active material portion 22, and thus, the mismatching with the upper active material portion 21 may occur. In this case, the etching of the edge area of the lower active material portion 22 may be required to solve the mismatching. The edge area may be a boundary area between the active material portions 21 and 22 and the non-coating portion (e.g., the non-coating portion 30).

Referring to FIG. 3, a plurality of active material portions 20a, 20b, and 20c may be provided on the electrode sheet 10. Although FIG. 3 illustrates that the active material portions 20a, 20b, and 20c are provided in a stripe pattern, the following description is not limited thereto. Each of the first active material portion 20a, the second active material portion 20b, and the third active material portion 20c may be coated in the stripe pattern in parallel on the electrode sheet 10. The coated first active material portion 20a, second active material portion 20b, and third active material portion 20c may require etching to a degree required for a subsequent process (e.g., a notching process). For example, when the notching process of forming an electrode tab is performed after applying the first active material portion 20a, the second active material portion 20b, and the third active material portion 20c in the electrode process, etching of a preliminary notching area 12 may be required during the coating process. During the notching process, notching may be performed on a portion of the preliminary notching area 12 to form the electrode tab.

Although the boundary area 11 and the preliminary notching area 12 have been described with reference to FIGS. 2 and 3, the area on which the etching is required may not be limited thereto, and the following description will be given in the area on which the etching is required. In the case of performing the etching, it may be applied without particular limitation.

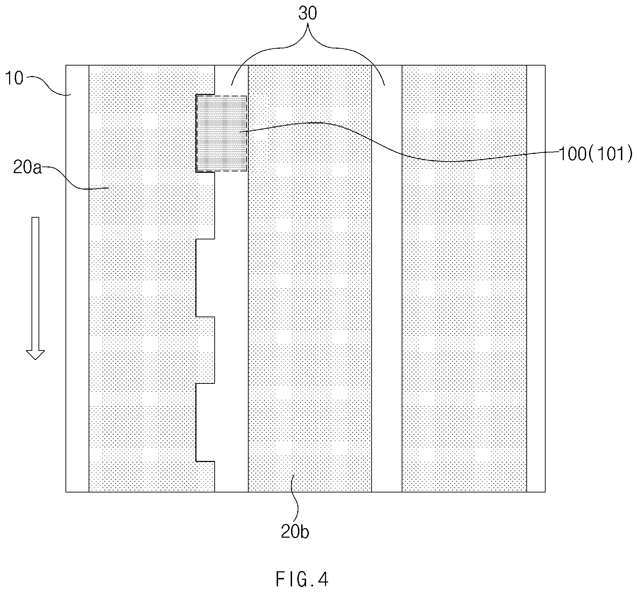

FIG. 4 is a schematic view of the laser etching system 100 according to an embodiment of the present invention. The above description may be equally or similarly applied below.

The laser etching system 100 may perform laser etching on an area, on which the etching is required, such as the boundary area 11 or the preliminary notching area 12. The laser etching system 100 may include a laser etching device 101, and the active material portion (e.g., the first active material portion 20a) may be etched using the laser etching device 101. For example, the laser etching device 101 may etch an edge of the first active material portion 20a at a predetermined position in a traveling direction of the electrode sheet 10. While the electrode sheet 10 moves along the traveling direction, the etching may be performed by a predetermined area at predetermined intervals by the laser etching device 101.

Hereinafter, the laser etching device 101 of the laser etching system 100 will be described in detail.

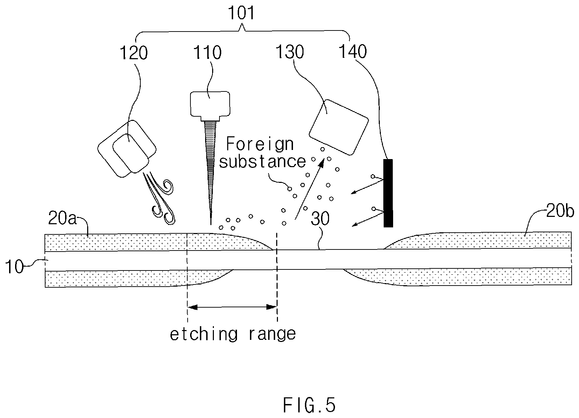

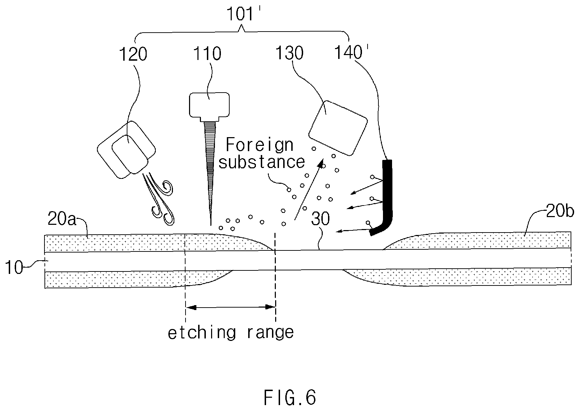

FIG. 5 is a schematic view illustrating the laser etching device 101 of the laser etching system 100 and a state in which the laser etching device 101 etches a first active material portion 20a according to an embodiment of the present invention, and FIG. 6 is a schematic view illustrating a laser etching device 101' that is a modified example of the laser etching device illustrated in FIG. 5. The above description may be equally or similarly applied below. In addition, although the first active material portion 20a has been described below as an example, it is not particularly limited.

As described above, the active material portions 20a, 20b, and 20c may be applied on the electrode sheet 10, and the laser etching device 101 may perform etching on the first active material portion 20a. Hereinafter, an example in which the laser etching device 101 etches the first active material portion 20a will be described, but is not limited thereto.

Referring to FIGS. 5 and 6, the laser etching device 101 may include a laser unit 110. The laser unit 110 may irradiate laser onto the first active material portion 20a. For example, the laser unit 110 may irradiate laser onto the edge of the first active material portion 20a to etch the edge of the first active material portion 20a. When the laser is irradiated onto the first active material portion 20a, foreign substances (e.g., etched active material residue) may be generated by the laser etching. The edge may be a boundary between the first active material portion 20a and the non-coating portion 30.

The laser etching device 101 may include a blowing unit 120. The blowing unit 120 may blow the foreign substances generated by etching the first active material portion 20a. For example, the blowing unit 120 may be disposed above the first active material portion 20a and may blow the air toward the non-coating portion 30 for the foreign substances from an upper side of the first active material portion 20a. In this case, the foreign substances generated by the etching may fly toward the non-coating portion 30 or the second active material portion 20b, which is directed in a direction away from the first active material portion 20a. The blowing unit 120 may blow the air at a blowing angle of 10 degrees to 80 degrees based on an air-receiving surface of both surfaces of the electrode sheet 10. When the blowing unit 120 blows the air at an angle greater than 80 degrees, the foreign substances may be blown onto the first active material portion 20a. In addition, when the blowing unit 120 blows air at an angle less than 10 degrees, a suction unit 130 to be described below may blow the foreign substances toward the second active material portion 20b before suctioning the foreign substances. In addition, an diffusion preventing effect by a barrier 140 described later may be reduced. The blowing angle of the blowing unit 120 may be an angle that is effective for the suction unit 130 to suction the foreign substances generated due to the etching or may maximize the diffusion preventing effect by the barrier 140. In addition, the blowing unit 120 may blow the air with a blowing pressure of 0.2 bars to 5.0 bars. For example, when the laser etching is performed to generate a large amount of foreign substances (or when an etching range is wide), the blowing unit 120 may increase in blowing pressure. For another example, when the laser etching is performed to generate a small amount of foreign substances (or when the etching range is narrow), the blowing unit 120 may decrease in blowing pressure. When the blowing unit 120 increases or decreases in blowing pressure, it may be effective to blow the air at a pressure in a range of 0.2 bars to 5.0 bars, and when the blowing pressure is out of the range, the blowing pressure may not be properly performed.

The blowing unit 120 may be preset to a predetermined blowing angle or blowing pressure according to the type or state of the foreign substances generated by the etching and also may be adjusted in real time. However, it may not be limited thereto.

The laser etching device 101 may include a suction unit 130. The suction unit 130 may suction the foreign substances. The suction unit 130 may be disposed at an opposite side of the blowing unit 120 with the laser unit 110 therebetween. The suction unit 130 may be disposed above the non-coating portion 30. For example, the suction unit 130 may be disposed between the second active material portions 20b at a non-coating portion 30-side boundary in the etching range to effectively suction the foreign substance generated when the laser unit 110 irradiates the laser in the etching rang. In other words, the suction unit 130 may be disposed above the non-coating portion 30 between the first active material portion 20a and the second active material portion 20b, but may be disposed on an area out of the etching range. However, it may not be limited thereto. The suction unit 130 may suction the foreign substances generated by the laser etching. As the foreign substances blown by the blowing unit 120 is suctioned by the suction unit 130, diffusion to the adjacent second active material portion 20b may be prevented. The suction pressure of the suction unit 130 may be preset or adjusted. For example, the suction pressure of the suction unit 130 may be equal to or greater than the blowing pressure of the blowing unit 120.

The laser etching device 101 may include a barrier 140. The barrier 140 may prevent diffusion of the foreign substances. For example, when the blowing unit 120 blows the foreign substances, the barrier 140 may prevent the foreign substances from being diffused into the second active material portion 20b by the blowing. The barrier 140 may extend in a direction perpendicular to the electrode sheet 10 (or the top surface of the electrode sheet 10). For example, as described above, the barrier 140 may extend in the direction perpendicular to the top surface of the electrode sheet 10 to block a path from which the foreign substances fly to the second active material portion 20b by the blowing.

The laser etching device 101 may include at least a laser unit 110, a blowing unit 120 and a suction unit 130. The laser unit 110, the blowing unit 120, and the suction unit 130 of the laser etching device 101 may be disposed in a direction traversing the traveling direction (or moving direction) of the electrode sheet 10. For example, the laser unit 110 may be disposed on the edge of the first active material portion 20a to radiate laser to the edge of the first active material portion 20a.

The blowing unit 120 may be disposed on the first active material portion 20a to blow the foreign substances in a direction from the first active material portion 20a to the second active material portion 20b. In this case, the blowing unit 120 may be disposed inside the first active material portion 20a rather than the laser unit 110. In other words, the blowing unit 120 may be disposed farther from the edge of the first active material portion 20a than the laser unit 110.

The suction unit 130 may be disposed at an opposite side of the blowing unit 120 with respect to the laser unit 110. For example, the suction unit 130 may be disposed on the non-coating portion 30 or the second active material portion 20b.

As described above, when the laser unit 110, the blowing unit 120, and the suction unit 130 are disposed in a direction traversing the traveling direction of the electrode sheet 10 (e.g., a vertical direction or an inclined direction), the foreign substances blown by the blower unit 120 may be effectively prevented from being accumulated on an etching target again. For example, the foreign substances of the first active material portion 20a blown by the blowing unit 120 may be prevented from being accumulated on the first active material portion 20a again.

The laser unit 110, the blowing unit 120, and the suction unit 130 may be linearly disposed in the direction transverse to the traveling direction of the electrode sheet 10. When arranged linearly, the suction unit 130 may effectively suction the foreign substances blown by the blowing unit 120.

In addition, when the laser etching device 101 further includes the barrier 140, it is possible to prevent not only the above-described effect but also an influence of the neighboring active material portion. For example, the foreign substances of the first active material portion 20a blown by the blowing unit 120 through the barrier 140 may be prevented from being accumulated on the second active material portion 20b.

Referring to FIG. 6, a laser etching device 101', which is a modified example of the laser etching device 101, may include a barrier 140'. The barrier 140' may include a bent portion. The barrier 140' may include a portion extending in a direction perpendicular to the electrode sheet 10 (or the top surface of the electrode sheet 10), and the barrier 140' may include a bent portion bent from a distal end of a side of the electrode sheet 10 toward the non-coating portion 30 or the suction unit 130. When the barrier 140' includes the bent portion, it is possible to block the foreign substances diffused in a diagonal direction. For example, the diffusion of the foreign substances may be effectively prevented by preventing the foreign substances blown by the blowing unit 120 from moving in the diagonal direction with respect to the second active material portion 20b. In addition, when the barrier 140' includes the bent portion, a blowing path (or air flow) by the blowing unit 120 may be guided. For example, when the blowing unit 120 blows the air, the suction of the suction unit 130 may be more effective by guiding the air blowing path so that the air flow is directed toward the suction unit 130.

The barriers 140 and 140' described with reference to FIGS. 5 and 6 may be disposed above the other active material portion adjacent to one active material portion that is subjected to the etching. For example, the barriers 140 and 140' may be disposed above the second active material portion 20b that is the other active material portion adjacent with the first active material portion 20a, which is one active material portion etched by the laser unit 110, and the non-coating portion 30 therebetween. Specifically, the second active material portion 20b may be disposed above the edge of the non-coated portion 30 so as not to diffuse the foreign substances into the second active material portion 20b. However, it is not limited thereto, and the barriers 140 and 140' may be disposed above the non-coating portion 30. For example, the barriers 140 and 140' are disposed above the non-coating portion 30, but may be disposed on the non-coating portion 30 at a side of the second active material portion 20b.

The barriers 140 and 140' may be disposed closer to the other active material portion adjacent to one active material portion than to one active material portion on which the etching is performed. For example, a distance between the first active material portion 20a, which is one active material portion etched by the laser unit 110, and each of the barriers 140 and 140' may be greater than a distance between the second active material portion 20b, which is the other active material portion adjacent with the first active material portion 20a and the non-coating portion 30 therebetween, and each of the barriers 140 and 140'.

The barriers 140 and 140' may be disposed closer to the second active material portion 20b than the suction unit 130. For example, the distance between each of the barriers 140 and 140' and the second active material unit may be less than a distance between the suction unit 130 and the second active material portion 20b to prevent the foreign substances, which are blown by the blowing unit 120, but are not suctioned by the suction unit 130, from being diffused into the second active material portion 20b.

As described above, the electrode may be manufactured by etching the first active material portion 20a using the laser etching device 101.

In the method for manufacturing an electrode, a process of etching the first active material portion 20a using the laser etching device 101 has been described, but may be equally or similarly applied in processes of etching the second active material portion 20b using the laser etching device 102 to be described later.

The method for manufacturing the electrode may include a process of applying the active material on the electrode sheet 10 to form the active material portions 20a and 20b and the non-coating portion 30.

The method for manufacturing the electrode may include a process of etching a portion of the edge of the first active material portion 20a. The etching process may include a process of irradiating laser to a portion of the edge of the first active material portion 20a using the laser unit 110 to etch the portion of the edge of the first active material portion 20a, a process of blowing air toward the non-coating portion 30 using the blowing unit 120 for foreign substances generated as the portion of the edge is etched, and a process of suctioning the foreign substances blown and diffused by using the suction unit 130 disposed at the opposite side of the blowing unit 120 with the laser unit 110 therebetween. The portion of the edge may be a portion of a boundary between the first active material portion 20a and the non-coating portion 30.

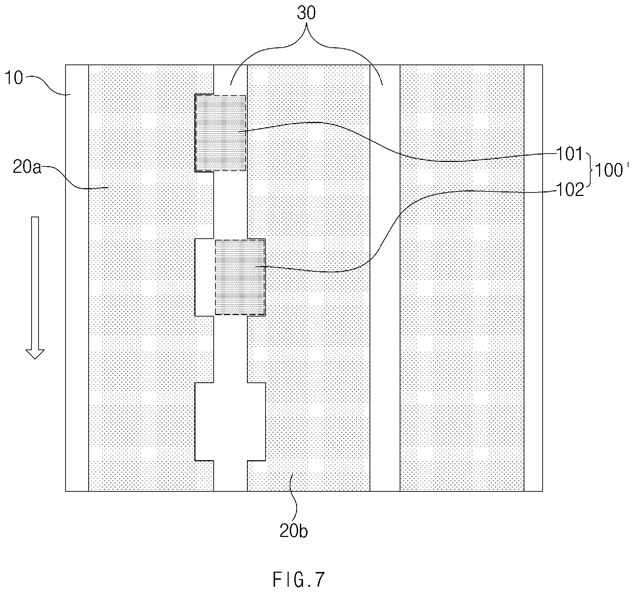

FIG. 7 is a schematic view of a laser etching system 100' according to another embodiment of the present invention. The laser etching system 100' may include laser etching devices 101 and 102. The above description may be equally or similarly applied below.

The laser etching system 100' may include a laser etching device 101 and a laser etching device 102. The laser etching device 101 and the laser etching device 102 may be sequentially disposed in a moving direction (or traveling direction) of the electrode sheet 10. In other words, the laser etching device 101 and the laser etching device 102 may be disposed in the traveling direction of the electrode sheet 10 (e.g., direction indicated by an arrow) and may be spaced a predetermined distance from each other in the traveling direction. In addition, the laser etching device 101 may be disposed adjacent to the first active material portion 20a to perform the etching on the first active material portion 20a, and the laser etching device 102 may be disposed adjacent to the second active material portion 20b to perform the etching on the second active material portion 20b. The laser etching device 101 may etch the edge of the first active material portion 20a, which is defined as a boundary with the non-coating portion 30, and the laser etching device 102 may etch the second active material portion 20b, which is defined as a boundary with the non-coating portion 30. In other words, the laser etching device 101 and the laser etching device 102 may be disposed at predetermined positions to perform the etching on the edge of each of the first active material portion 20a and the second active material portion 20b while the electrode sheet 10 moves in the traveling direction. The edge may be a boundary between the active material portions 20a and 20b and the non-coating portion 30.

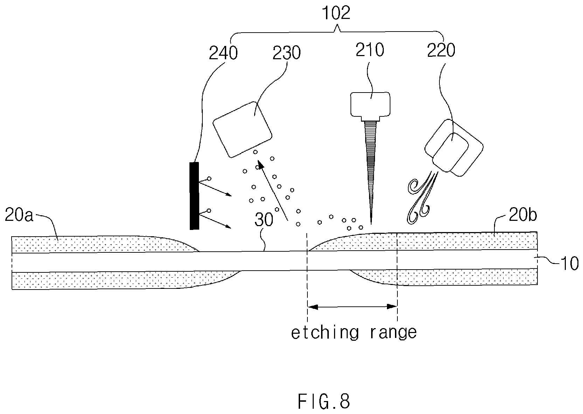

FIG. 8 is a view illustrating a state in which a laser etching device 102 of the laser etching system 100' etches the second active material portion 20b according to another embodiment of the present invention. The above description may be equally or similarly applied below.

Referring to FIG. 8, the laser etching device 102 may include a laser unit 210, a blowing unit 220, a suction unit 230, and a barrier 240, which respectively correspond to the laser unit 110, the blowing unit 120, the suction unit 130, and the barrier 140 of the above-described laser etching device 101. Alternatively, in the case of the barrier 240, although not shown, the barrier 240 may correspond to the barrier 140' of the laser etching device 101', which is a modified example of the laser etching device 101.

In the laser etching device 102, the laser unit 210, the blowing unit 220, the suction unit 230, and the barrier 240 may be disposed in a direction that is symmetrical to the laser etching devices 101 and 101' to perform the etching on the second active material portion 20b. However, the same or similar descriptions may be applied to the arrangement positions and operations of the laser unit 210, the blowing unit 220, the suction unit 230, and the barrier 240.

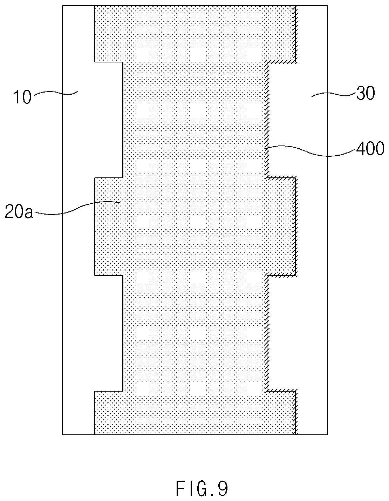

FIG. 9 is a view illustrating a heat-affected zone defined at a boundary between the active material portion 20a and a non-coating portion 30 according to embodiments of the present invention. The above description may be equally or similarly applied below.

The electrode may include a first active material portion 20a coated with the active material on the electrode sheet 10 and a non-coating portion 30 on which the active material is not applied on the electrode sheet 10. The boundary between the laser-etched first active material portion 20a and the non-coating portion 30 (or an edge of the first active material portion 20a) may define a portion of the electrode. The heat affected zone (HAZ) 400 may be defined at the boundary between the first active material portion 20a and the non-coating portion 30 by the laser etching. The heat-affected zone 400 may have brightness less than that the non-coating portion 30. In addition, the heat-affected zone 400 may preferably have a width of 200 µm or less. When the electrode is manufactured by forming the heat-affected zone 400 having a width less than the above-described width, the effect of laser etching may be minimized, and thus the quality of the coating and the electrode may be improved.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Electrode sheet
11: Boundary area
12: Preliminary notching area
20: Active material portion
20a: First active material portion
20b: Second active material portion
20c: Third active material portion
21: Upper active material portion
22: Lower active material portion
30: Non-coating portion
100, 100': Laser etching system
101, 101': Laser etching device
102: Laser etching device
110: Laser unit
120: Blowing unit
130: Suction unit
140, 140': Barrier
210: Laser unit
220: Blowing unit
230: Suction unit
240: Barrier
400: Heat-affected zone

## Claims

1. A laser etching device, which etches an active material portion on an electrode sheet comprising the active material portion and a non-coating portion, the laser etching device comprising:
a laser unit configured to irradiate laser onto the active material portion;
a blowing unit configured to blow foreign substances generated by the etching of the active material portion toward the non-coating portion; and
a suction unit disposed at an opposite side of the blowing unit with the laser unit therebetween to suction the foreign substances,
wherein the laser unit, the blowing unit, and the suction unit are disposed in a direction traversing a moving direction of the electrode sheet.

2. The laser etching device of claim 1, further comprising a barrier disposed at an opposite side of the blowing unit with the suction unit therebetween to prevent the foreign substances from being diffused.

3. The laser etching device of claim **1,** wherein the blowing unit is disposed above the active martial portion, and the suction unit is disposed above the non-coating portion.

4. The laser etching device of claim 2, wherein the barrier is disposed above the other active material portion adjacent with one active material portion, which is etched by the laser unit, and the non-coating portion therebetween.

5. The laser etching device of claim 2, wherein a distance between one active material portion, which is etched by the laser unit, and the barrier is greater than a distance between the other active material portion, which is adjacent with the one active material portion and the non-coating portion therebetween, and the barrier.

6. The laser etching device of claim 4, wherein the barrier includes a bent portion, which is bent toward the suction unit, at a distal end thereof.

7. The laser etching device of claim 1, wherein the blowing unit is configured to perform blowing at a blowing angle of 10 degrees to 80 degrees based on an air-receiving surface of both surfaces of the electrode sheet.

8. The laser etching device of claim 1, wherein the blowing unit is configured to perform the blowing at a blowing pressure of 0.2 bars to 5.0 bars.

9. A laser etching system, which etches a first active material portion and a second active material portion on an electrode sheet comprising the first active material portion, the second active material portion, and a non-coating portion disposed between the first active material portion and the second active material portion, the laser etching system comprising:
a first laser etching device configured to etch the first active material portion; and
a second laser etching device configured to etch the second active material portion,
wherein each of the first laser etching device and the second laser etching device comprises:
a laser unit configured to irradiate laser onto the active material portion;
a blowing unit configured to blow foreign substances generated by the etching of the active material portion toward the non-coating portion; and
a suction unit disposed at an opposite side of the blowing unit with the laser unit therebetween to suction the foreign substances,
wherein the laser unit, the blowing unit, and the suction unit are disposed in a direction traversing a moving direction of the electrode sheet.

10. The laser etching system of claim 9, further comprising a barrier disposed at an opposite side of the blowing unit with the suction unit therebetween to prevent the foreign substances from being diffused.

11. The laser etching system of claim 9, wherein the first laser etching device and the second laser etching device are sequentially disposed in a moving direction of the electrode sheet.

12. The laser etching system of claim 9, wherein, the first laser etching device is configured to etch an edge, which defines a boundary with the non-coating portion, on the first active material portion, and the second laser etching device is configured to etch an edge, which defines a boundary with the non-coating portion, on the second active material portion.

13. An electrode comprising:
an active material portion coated with an active material on an electrode sheet; and
a non-coating portion on which the active material is not applied on the electrode sheet,
wherein a heat-affected zone (HAZ) having a width of 200 µm or less is defined on a boundary between the active material portion and the non-coating portion.

14. The electrode of claim 13, wherein the heat-affected zone has brightness less than that of the non-coating portion.

15. A method for manufacturing an electrode, the method comprising:
forming an active material portion and a non-coating portion by applying an active material on an electrode sheet; and
etching a portion of an edge of the active material portion,
wherein the etching of the portion of the edge comprises:
irradiating laser to the portion of the edge using a laser unit to etch the portion of the edge;
blowing foreign substances generated by etching the portion of the edge toward the non-coating portion using a blowing unit; and
suctioning the foreign substances blown and diffused by using a suction unit disposed at an opposite side of the blowing unit with the laser unit therebetween.
